# EUROPEAN PATENT SPECIFICATION

(11) **EP 2 331 398 B1**
(45) Date of publication and mention of the grant of the patent: **17.05.2017**
(21) Application number: 08813556.1
(22) Date of filing: 22.09.2008
(51) Int. Cl.: B63H 3/08, B63H 3/04, B64C 11/42, B64C 11/06, F03D 7/02

(54) **AN ADJUSTABLE PROPELLER ARRANGEMENT AND A METHOD OF DISTRIBUTING FLUID TO AND/OR FROM SUCH AN ADJUSTABLE PROPELLER ARRANGEMENT.**
EINSTELLBARE PROPELLERANORDNUNG UND VERFAHREN ZUM VERTEILEN VON FLUID ZU UND/ODER VON SOLCH EINER EINSTELLBAREN PROPELLERANORDNUNG
SYSTÈME D HÉLICE RÉGLABLE ET PROCÉDÉ DE DISTRIBUTION DE FLUIDE À CE SYSTÈME D HÉLICE RÉGLABLE OU À PARTIR DE CE DERNIER

(43) Date of publication of application: 15.06.2011
(73) Proprietor: Caterpillar Propulsion Production AB, 475 22 Öckerö (SE)
(72) Inventor: THYBERG, Conny, S-430 90 Öckerö (SE)
(74) Representative: BRP Renaud & Partner mbB Rechtsanwälte Patentanwälte Steuerberater
(86) International application number: PCT/SE2008/051059
(87) International publication number: WO 2010/033060

(56) References cited:
- EP-A1- 0 298 932
- WO-A1-86/02901
- DE-A1- 2 528 387
- DE-C1- 946 590
- US-A- 2 188 313
- US-A- 2 661 807
- US-A- 2 717 652
- US-A- 2 786 539
- US-A- 3 086 595
- US-A- 3 560 108

## Description

### TECHNICAL FIELD

The present invention relates to an adjustable propeller arrangement comprising a drive shaft extending in a longitudinal direction and an adjustable propeller connected to the drive shaft. The adjustable propeller comprises at least one propeller blade and an adjusting member connected to the at least one propeller blade such that the pitch of the at least one propeller blade is controlled by the position, in the longitudinal direction, of the adjusting member. The arrangement comprises a conduit assembly which in turn comprises a duct located outside of the drive shaft and the conduit assembly further comprises a first conduit portion extending at least partially within the drive shaft. The conduit assembly is adapted to provide a fluid communication between the adjustable propeller and the duct.

The present invention also relates to a method of distributing fluid to and/or from an adjustable propeller arrangement.

### BACKGROUND OF THE INVENTION

Floating vessels, in particular cargo vessels and supply vessels, of today are generally furnished with a propulsion system which includes an adjustable propeller arrangement. To this end, the propeller arrangement includes a propeller with at least one propeller blade, but often a plurality of propeller blades, wherein the pitch of each one of the aforesaid blades is controlled by a servo arrangement. The servo arrangement generally is a hydraulic arrangement the fluid chambers and piston of which generally are located in the boss of the propeller.

In order to change the pitch of the propeller blades of the propeller, hydraulic fluid is transported between at least one of the fluid chambers and a source of hydraulic fluid. However, the hydraulic arrangement is adapted to rotate with the drive shaft of the vessel and the source of hydraulic fluid is generally located outside the drive shaft, i.e. in a location which is stationary in relation to the vessel. To this end, prior art proposes various solutions as regards how to provide the aforesaid transport of the hydraulic fluid.

However, as a general common feature, the prior art solutions generally includes a conduit, a portion of which is located in a longitudinally extending bore in the drive shaft and wherein the conduit, often one end thereof, is fixedly attached to the piston of the hydraulic arrangement.

For instance, US 4,563,940 discloses an adjustable propeller arrangement with a oil feed device which includes a control rod which is rigidly connected to the piston of a servo motor in the propeller. Moreover, '940 teaches that the rod extends in a longitudinally extending bore in the drive shaft of the propeller arrangement and that the rod is provided with a plurality of longitudinally extending conduits connected with cylinder chambers in the servo motor. Further, the '940 arrangement includes an oil inlet and an oil outlet located outside of the drive shaft which inlet and outlet are fluidly connected to the conduits in the control rod. The arrangement presented therein includes a rather complex and space requiring connection arrangement for fluidly connecting the inlet and outlet, respectively, with the corresponding conduits in the control rod.

The connection arrangement disclosed in '940 may be cumbersome to manufacture since it includes a large number of cavities, gaps and spaces. Moreover, due to the complexity of the connection arrangement, the '940 propeller arrangement will be relatively expensive and heavy. Additionally, the '940 connection arrangement requires that a plurality of radially openings be provided in the drive shaft, or at least in an intermediate shaft forming a part of the drive shaft, which openings may impair the strength, in particular the torsional strength, of the drive shaft.

For example, further propeller arrangements are known from DE 940 590 C1 and DE 25 28 387 A1.

As such, there is a need for improvements of the prior art adjustable propeller arrangements, in particular as regards prior art connection arrangements fluidly connecting inlets and outlets of a propeller arrangement with conduits extending at least partially within the drive shaft of the propeller arrangement.

### SUMMARY OF THE INVENTION

A first object of the present invention is to provide an adjustable propeller arrangement which arrangement comprises a drive shaft and which provides a simple yet robust fluid connection between a duct located outside the drive shaft and a conduit located at least partially within the drive shaft.

A second object of the present invention is to provide an adjustable propeller arrangement, wherein the arrangement is scalable such that the design of which may be adjusted to provide fluid communications between a plurality of ducts located outside the drive shaft and a plurality of conduits located at least partially within the drive shaft without unduly increasing the complexity and/or size of the distribution system.

A third object of the present invention is to provide an adjustable propeller arrangement, which arrangement requires a minimum of, preferably only one, radially extending openings in the drive shaft of the propeller arrangement.

At least one of the above objects is solved by a distribution system according to claim 1.

As such, the present invention relates to an adjustable propeller arrangement comprising a drive shaft extending in a longitudinal direction and an adjustable propeller connected to the drive shaft. The adjustable propeller comprises at least one propeller blade and an adjusting member connected to the at least one propeller blade such that the pitch of the at least one propeller blade is controlled by the position, in the longitudinal direction, of the adjusting member. The arrangement comprises a conduit assembly which in turn comprises a duct located outside of the drive shaft and the conduit assembly further comprises a first conduit portion extending at least partially within the drive shaft. The conduit assembly is adapted to provide a fluid communication between the adjustable propeller and the duct.

According to the invention, a rigid connection, in at least the longitudinal direction, is provided between the adjusting member and the duct.

By an adjustable propeller arrangement according to claim 1, any displacements in the longitudinal direction between a fluid source, adapted to in fluid communication with the propeller, may be dealt with outside of the drive shaft. This is preferred, since there is generally more space available outside of the drive shaft than within the same.

Moreover, the adjustable propeller arrangement according to claim 1 obtained by a minimum of machining operations, such as drilling, of the drive shaft of the arrangement.

Additionally, the adjustable propeller arrangement according to claim 1 ensures that the duct and the adjusting member moves uniformly. As such, since the pitch of the propeller blades of the propeller may be determined based on the longitudinal position of the adjusting member, the position of the duct ,or any component outside the drive shaft rigidly connected to the duct, may be also used for determining the pitch of the propeller blades. This is advantageous, since rules as regards adjustable propeller arrangements often stipulate that the pitch of the propeller blades should be determinable from the actual position of the adjusting member and not from secondary information, such as for instance a fluid pressure in a servo system actuating the adjusting member.

According to claim 1, the drive shaft comprises a longitudinally extending bore and the drive shaft further comprises a slit providing a passage between the bore and the outside of the drive shaft. The conduit assembly further comprises a second conduit portion, the second conduit portion extending through the slit. The conduit assembly further comprises a chamber which is adapted to extend circumferentially around the drive shaft and the chamber is in fluid communication with the second conduit portion and the duct.

According to another embodiment of the present invention, the adjustable propeller arrangement comprises an inner sleeve and an outer sleeve each one of which is adapted to extend circumferentially around the drive shaft. The inner sleeve is rigidly connected to the second conduit portion and the inner sleeve and the outer sleeve are rotatably connected to one another by a connection arrangement rigidly connecting the inner sleeve and the outer sleeve in at least the longitudinal direction. The inner sleeve comprises an inner wall for the chamber and the outer sleeve comprising an outer wall for the chamber and the distribution system further comprises a sealing arrangement comprising at least two side walls for the chamber. The above embodiment provides for that only a few dynamic seals are needed in a distribution system distributing fluid to and from the adjustable propeller, which is preferred.

According to a further embodiment of the present invention, the connection arrangement comprises a thrust bearing.

According to another embodiment of the present invention, the sealing arrangement is fixedly attached to the outer sleeve.

According to a further embodiment of the present invention, the duct is located on the outer sleeve.

According to another embodiment of the present invention, the adjustable propeller arrangement further comprises a plurality of conduit assemblies according to the above.

According to a further embodiment of the present invention, the adjustable propeller comprises a hydraulic servo comprising a forward pitch chamber and a backward pitch chamber separated by a piston which piston is rigidly connected to the adjusting member. The plurality of conduit assemblies comprises a forward pitch conduit assembly providing a fluid communication between the forward pitch chamber and a forward pitch conduit assembly duct and the plurality of conduit assemblies further comprises a backward pitch conduit assembly providing a fluid communication between the backward pitch chamber and a backward pitch conduit assembly duct.

According to another embodiment of the present invention, the adjustable propeller further comprises a cavity in fluid communication with at least a part of the adjusting member. The plurality of conduit assemblies comprises a cavity inlet assembly adapted to provide an inlet fluid communication between the cavity and a cavity inlet conduit assembly duct and the plurality of conduit assemblies further comprises a cavity outlet conduit assembly adapted to provide an outlet fluid communication between the cavity and a cavity outlet conduit assembly duct.

A second aspect of the present invention relates to a vessel comprising an adjustable propeller arrangement according to the first aspect of the present invention.

A third aspect of the present invention relates to a method of distributing fluid to and/or from an adjustable propeller arrangement, the arrangement comprising a drive shaft extending in a longitudinal direction and an adjustable propeller connected to the drive shaft, the adjustable propeller comprising at least one propeller blade and an adjusting member connected to the propeller blade such that the pitch of the propeller blade is controlled by the position, in the longitudinal direction, of the adjusting member. The method comprises a step of transporting the fluid between a duct and the adjustable propeller in a conduit extending at least partially within the drive shaft, the duct being located outside of the drive shaft a first distance, in the longitudinal direction, from the adjusting member.

According to the third aspect of the present invention the method further comprises a step of keeping the distance substantially constant during the transporting of the fluid.

According to the third aspect of the present invention, the drive shaft comprises a longitudinal axis extending parallel to the longitudinal direction, the drive shaft being adapted to rotate about the longitudinal axis, wherein the method further comprises a step of preventing the duct from rotating around the longitudinal axis.

According to another embodiment of the third aspect of the present invention, the method further comprises a step of imparting a longitudinally extending displacement of the duct relative to the drive shaft when the piston is subjected to a longitudinally extending displacement.

### BRIEF DESCRIPTION OF THE DRAWINGS

The present invention will hereinafter be further explained by means of non-limiting examples with reference to the appended figures wherein:
- Fig. 1: is a schematic side view of a vessel provided with an adjustable propeller arrangement;
- Fig. 2A: is a schematic side view of a partial cross section of an embodiment of the adjustable propeller arrangement of the present invention;
- Fig. 2B: is a magnification of a portion of the Fig. 2A propeller arrangement;
- Fig. 3A: is a schematic side view of a partial cross section of another embodiment of the adjustable propeller arrangement;
- Fig. 3B: is a magnification of a portion of the Fig. 3A adjustable propeller arrangement;
- Fig. 4: is a schematic side view of partial cross section of a further embodiment of the adjustable propeller arrangement of the present invention.

### DETAILED DESCRIPTION OF PREFERRED EMBODIMENTS

The invention will be described using examples of embodiments. It should however be realized that the embodiments are included in order to explain principles of the invention and not to limit the scope of the invention, defined by the appended claims.

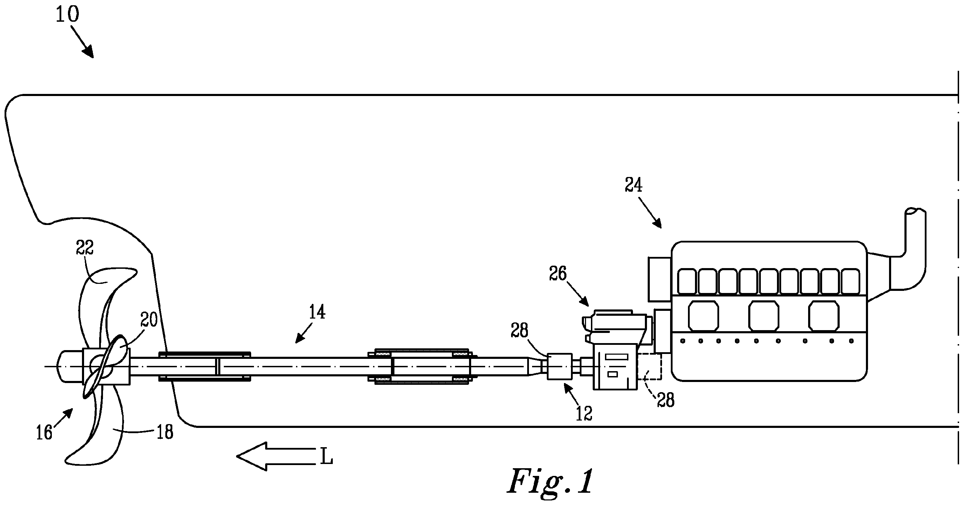

Fig. 1 illustrates a schematic side view of a vessel 10 comprising an adjustable propeller arrangement 12. As may be gleaned from Fig. 1, the arrangement 12 comprises a drive shaft 14 extending in a longitudinal direction L and an adjustable propeller 16 connected to the drive shaft 14. The adjustable propeller comprises at least one propeller blade, in the embodiment of the adjustable propeller illustrated in Fig. 1, the propeller includes four propeller blades three of which 18, 20, 22 are visible in Fig. 1. However, other implementations of propellers with more or fewer propeller blades may also be used with the propeller arrangement of the present invention. Furthermore, the vessel 10 may in some applications be provided with two or more adjustable propeller arrangements 12 of the present invention.

Moreover, Fig. 1 illustrates that the vessel 10 includes an engine 24 which generally is connected to the drive shaft 14 through a gear 26. Additionally, a part of a distribution system 58 is illustrated in Fig. 1, which part in the Fig. 1 implementation of the distribution system is schematically illustrated by a housing 28 partly enclosing the drive shaft 14. In Fig. 1, the housing 28 is located in a preferred location in the propeller arrangement 12, namely around the drive shaft 14 and between the gear 26 and the propeller 16. However, in other implementations of the distribution system of the present invention, the housing 28 may be located at other locations in the propeller arrangement 12. For instance, the housing 28 may be located on an extension of the drive shaft 14 extending through the gear 26, such that the housing 28 is located on the opposite side of the gear 26 than the propeller 16. This alternative location is indicated by dotted lines in Fig. 1.

It should be noted that the drive shaft 14 does not necessarily have to be made in one piece. In practice, the drive shaft 14 may in fact often be constituted by a plurality of shaft parts which are fixedly attached to one another to form the complete drive shaft 14.

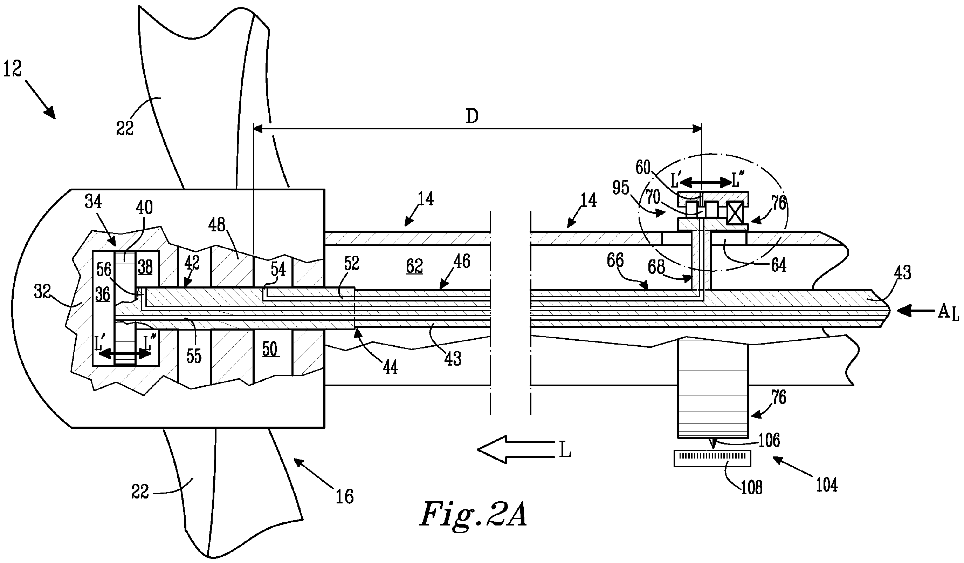

Fig. 2A illustrates a partial cross section of the adjustable propeller arrangement 12 illustrated in Fig. 1. As may be gleaned from Fig. 2A, the propeller 16 comprises a propeller boss 32 which in turn comprises a hydraulic servo 34 comprising: a forward pitch chamber 36, a backward pitch chamber 38 and a piston 40. The piston 40 is generally fixedly attached to an effecting member 42, which effecting member is commonly denoted a piston rod, which piston rod 42 in turn is fixedly attached to a fluid conveying member 43, which member 43 in Fig. 2A is exemplified as a longitudinally extending rod provided with a plurality of longitudinally extending bores or channels, the purpose of which will be explained hereinbelow. Thus, in the embodiment of the propeller arrangement 12 illustrated in Fig. 2A, the fluid conveying member 43 is fixedly connected to the piston 40 via the piston rod 42. However, in other embodiments of the propeller arrangement, the fluid conveying member 43 may instead be connected directly to the piston 40 or via additional connecting members (not shown).

As may be realized by a person skilled in the art, depending on the fluid pressure in the forward pitch chamber 36 and a backward pitch chamber 38, respectively, the piston 40 may be imparted a displacement in either a positive L' or negative L" displacement in the longitudinal direction L. Such a displacement will be transmitted to an adjusting member 48 through the piston rod 42 and the displacement of the adjusting member 48 will in turn impart a change in the pitch of each one of the propeller blades 18, 22. As may be realized when studying Fig. 2A, since the adjusting member 48 is fixedly attached to the piston rod 42, the adjusting member 48 is also fixedly connected to the fluid conveying member 43.

Fig. 2A further illustrates that the boss 32 comprises a cavity 50 in which the aforesaid adjusting member 48 is located. This cavity is preferably filled with fluid for lubrication purposes and the fluid is fed from a conduit 52 one end 54 of which discharges into the cavity 50. As may be gleaned from Fig. 2A, the conduit 52 extends at least partially in the fluid conveying member 43. Moreover, the fluid conveying member 43 comprises two additional conduits, namely a forward pitch chamber conduit 55 for feeding the forward pitch chamber 36 with hydraulic fluid and a backward pitch chamber conduit 56 for feeding the backward pitch chamber 38 with hydraulic fluid. In the embodiment of the propeller arrangement 12 illustrated in Fig. 2A, the forward pitch chamber conduit 54 and the backward pitch chamber conduit 56 are connected to a traditional fluid distribution system (not shown) which is not discussed further here. However, the conduit 52 forms a part an embodiment of the adjustable propeller arrangement 12 of the present invention the function and constitution of which will be discussed hereinbelow.

As such, the adjustable propeller arrangement 12 comprises a distribution system 58 for distributing fluid to and/or from the adjustable propeller arrangement 12 comprises a conduit assembly 46 comprising a duct 60 being adapted to be located outside of the drive shaft 14. Generally, the duct 60 is located outside of the envelop surface of the drive shaft 14, i.e. the duct 60 is located at a distance - in a radial extension - from the drive shaft 14. The conduit assembly 46 further comprises a first conduit portion 66. In the embodiment illustrated in Fig. 2A, this first conduit portion 66 comprises the conduit 52 discharging into the cavity 50. The first conduit portion 66 extends at least partially within the drive shaft 14. As may be gleaned from Fig. 2A, the conduit assembly 46 provides a fluid communication between the adjustable propeller 16 and the duct 60. Moreover, the first conduit portion 66 further comprises a connection portion 44 adapted to be fixedly connected to the adjusting member 48, in this case via the piston rod 42 and the conveying member 43. In the implementation of the distribution system 58 illustrated in Fig. 2A, the connection portion 44 of the first conduit portion 66 is comprised in the conveying member 43, which is fixedly attached to the piston rod 42. However, in other implementations of the distribution system 58, the first conduit portion 66 may instead comprise a separate pipe (not shown) which is fixedly attached to the piston rod 42 thus forming the connection portion 44.

As may be realized from Fig. 2A, when the adjusting member 48 is imparted either a positive L' or negative L" displacement in the longitudinal direction L by means of the hydraulic servo 34, the connection portion 44 will be subjected to a corresponding displacement since the connection portion 44 is rigidly connected to the adjusting member 48. Moreover, the duct 60 will also be imparted the same displacement as the connection portion 44 and hence as the piston 40. Thus, the distribution system 58 provides for that the duct 60 moves uniformly, at least in the longitudinal direction L, with the adjusting member 48. As such, the duct 60 is located at a first distance D in the longitudinal direction L from the adjusting member 48 and this first distance D will be kept constant, irrespective of the longitudinal location of the adjusting member 48. In other words, the distribution system 58 provides a rigid connection, in at least the longitudinal direction L, between the adjusting member 48, via the connection portion 44, and the duct 60. One example of how this rigid connection is achieved is discussed hereinbelow.

As may be gleaned from Fig. 2A, the drive shaft 14 comprises a longitudinally extending bore 62 and the drive shaft 14 further comprises a slit 64 providing a passage between the bore 62 and the outside of the drive shaft 14. In the implementation of the drive shaft 14 illustrated in Fig. 2A, the slit 64 extends substantially radially, i.e. in a direction perpendicular to the longitudinal direction, which is preferred. However, in other implementations of the drive shaft 14 (not shown), the slit 64 may for instance form an angle other than 90° with the longitudinal extension L.

Moreover, Fig. 2A illustrates that the conduit assembly 46 comprises a second conduit portion 68. The second conduit portion 68 is fixedly attached to the first conduit portion 66 and extends through the slit 64 in the drive shaft 14. Fig. 2A also illustrates that the conduit assembly further comprises a chamber 70 - arranged in a chamber housing 95 - which is adapted to extend circumferentially around the drive shaft 14. The chamber 70 is in fluid communication with the second conduit portion 68 and the duct 60. Generally, the chamber 70 is annular. The drive shaft 14 is adapted to rotate about a longitudinal axis A_{L} extending parallel to the longitudinal direction L and the second conduit portion 68 is adapted to rotate with the drive shaft 14 whereas the duct 60 is adapted to not rotate with the drive shaft 14. On the other hand, the second conduit portion 68 and the duct 60 are connected such that a displacement in the longitudinal direction L of the second duct portion 68 is transmitted to the duct 60.

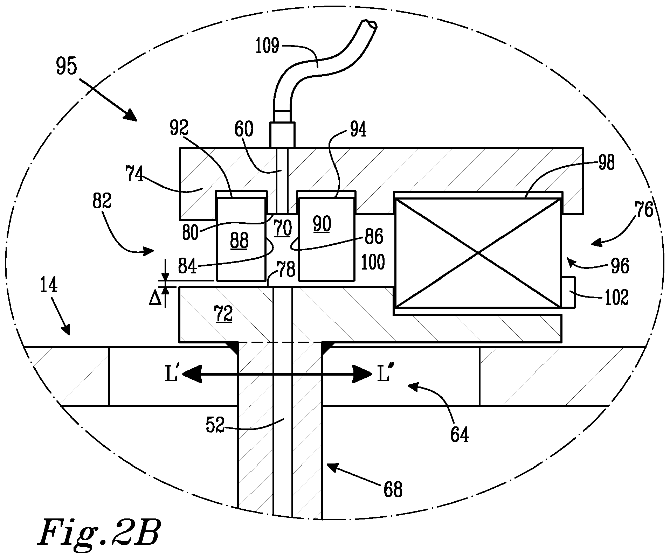

In order to obtain the aforesaid connection, the distribution system 58 - and in particular a chamber housing 95 - preferably comprises an inner sleeve 72 and an outer sleeve 74 each one of which extends circumferentially around the drive shaft 14 as illustrated in Fig. 2B. Purely by way of example, the inner and outer sleeve may be made of cast iron. The inner sleeve 72 is rigidly connected to the second conduit portion 68, for instance by means of a joint such as a pin, weld, screw, bolt or glue joint (not shown). However, the inner sleeve 72 is adapted to slide in the longitudinal direction L in relation to the drive shaft 14.

The inner sleeve 72 and the outer sleeve 74 are rotatably connected to one another by a connection arrangement 76 rigidly connecting the inner sleeve 72 and the outer sleeve 74 in at least the longitudinal direction L. As such, the inner sleeve 72 comprises an inner wall 78 for the chamber 70 and the outer sleeve 74 comprises an outer wall 80 for the chamber 70. Both the inner wall 78 and the outer wall 80 extend circumferentially around the drive shaft 14.

Moreover, the distribution system 58 and the chamber housing 95 further comprises a sealing arrangement 82 comprising at least two side walls 84, 86 for the chamber 70. In the implementation of the distribution system 58 illustrated in Fig. 2B, the sealing arrangement 82 comprises two sealing rings 88, 90 which are prevented from displacement, in at least the longitudinal direction L, relative to the outer sleeve 74 since the sealing rings 88, 90 are partially inserted in circumferentially extending grooves 92, 94 of the outer sleeve 74. Purely by way of example, the sealing rings 88, 90 may be made of bronze or steel lined with white metal. However, in other embodiments of the invention, the sealing arrangement 82 may instead form an integer part of the outer sleeve 74 (not shown).

Turning to Fig. 2B, when fluid is fed through the duct 60 such that a fluid pressure is built up in the chamber 70, the sealing rings 88, 90 will be pressed outwardly from the chamber 70. Thus, each one of the sealing rings 88, 90 will abut against a portion of the outer sleeve 74 resulting in that fluid is prevented from passing between the sealing rings 88, 90 and the outer sleeve 74. To this end, the sealing arrangement 82 may comprise additional sealing members (not show) such as rubber packings (not shown) between each one of the sealing rings and the outer sleeve 74. Moreover, a contact pressure will be built up between each one of the sealing rings 88, 90 will and the outer sleeve 74 which in turn results in friction forces between the sealing rings 88, 90 and the outer sleeve 74, which friction forces prevents rotation of the sealing rings 88, 90 in relation to the outer sleeve 74.

Additionally, in the embodiment of the distribution system 58 illustrated in Fig. 2B, there is provided a gap Δ between the sealing arrangement 82 and the inner sleeve 72. The magnitude of the gap Δ is preferably adjusted such that when a fluid pressure has been built up in the chamber 70 as discussed hereinabove, a portion of the fluid will enter the gap Δ such that a fluid film (not shown) is generated between the sealing arrangement 82 and the inner sleeve 72 which fluid film provides a sliding contact between the sealing arrangement 82 and the inner sleeve 72. However, the gap Δ is preferably sufficiently small so as to prevent - or at least significantly reduce - a fluid flow from the chamber 70 to the environment ambient of the sealing rings 88, 90. In order to obtained the characteristics of the sliding arrangement 82, the gap Δ is preferably within the range of 0.0001 to 0.0003 times the diameter of the drive shaft 14, wherein the diameter of the shaft 14 is measured at a portion of the shaft 14 adapted to receive the inner sleeve 72. Purely by way of example, if the diameter of the shaft is 500 mm, the gap Δ may preferably be within the range of 0.07 to 0.11 mm.

It should be noted, that instead of the provision of the gap Δ, other implementations of the distribution system 58 of the present invention may provide slide bearings (not shown) between the sealing arrangement 82 and the inner sleeve 72.

In the implementation of the distribution system 58 illustrated in Fig. 2B, the connection arrangement 76 comprises a thrust bearing 96, i.e. a bearing arrangement adapted to transmit positive and negative displacements in the longitudinal direction L between the inner and outer sleeve 72, 74 but which bearing does not transmit a rotation of the inner sleeve 72 to the outer sleeve 74. To this end, the thrust bearing 96 is connected to the outer sleeve 74 by means of a groove 98 in the outer sleeve 74 and the thrust bearing 96 is connected to the inner sleeve 72 by means of a circumferentially extending abutment surface 100 of the inner sleeve 72 and a bolt joint 102. However, in other embodiments of the present invention the connection arrangement may be the opposite such that the inner sleeve 72 is provided with the groove and the outer sleeve is provided with the abutment surface and the bolt joint (not shown). Purely by way of example, the thrust bearing may be a double row tapered roller bearing (not shown).

Thus, when the drive shaft 14 in Fig. 2A rotates around its longitudinal axis A_{L}, the second conduit portion 68 and the inner sleeve 72 also rotates whereas the outer sleeve 74 and the sealing arrangement 82 remains stationary in relation to the vessel 10. When fluid is to be fed to the cavity 50 of the boss 34, the fluid is fed through the duct 60 and into the chamber 70 which circumscribes the drive shaft 14. From the chamber 70, the fluid will pass through the second conduit portion 68, the first conduit portion 66 and finally discharge into the cavity 50.

If the pitch of the propeller blades 18, 20, 22 is altered by a change in the longitudinal position of the adjusting member 48, i.e. a longitudinal displacement, that longitudinal displacement is transmitted to first conduit portion 66 and subsequently to the outer sleeve 74 via the second conduit portion 68, the inner sleeve 72 and the connection arrangement 76. Since the duct 60 is provided in the outer sleeve 74, a rigid connection, at least in the longitudinal direction, has been obtained between the adjusting member 48 and the duct 60.

As may be realized by a person skilled in the art, it is possible to determine the pitch of the propellers from the longitudinal position of the adjusting member 48. However, since the outer sleeve 74 of the Fig. 2A and 2B distribution system 58 is rigidly connected to the adjusting member 48, it is thus also possible to determine the pitch of the propellers from the longitudinal position of the outer sleeve 74, or any component rigidly connected to the outer sleeve 74. As such, the Fig. 2A distribution system 58 comprises a measuring arrangement 104 on least one component of which is rigidly connected to the outer sleeve 74. In Fig. 2A, the measuring arrangement 104 is exemplified by a pin 106 fixedly attached to the outer sleeve 74 and a scale 108 fixedly attached to the vessel 10.

Since at least one purpose of the fluid transported to the cavity 50 is to lubricate parts of the propeller 16 in fluid connection with the cavity 50, the fluid preferably has appropriate lubrication properties. Purely by way of example, the fluid may be oil, such as mineral, synthetic or vegetable oil.

The duct 60 of the distribution system 58 is generally connected to a source (not shown), such as a tank (not shown), of the aforesaid fluid, which source generally is stationary in relation to the vessel 10. Since the duct 60 is adapted to be displaced in the longitudinal direction L, the fluid source and the duct 60 are preferably connected to one another by a fluid transport arrangement which is adapted to account for any changes in the longitudinal direction between the source and the duct 60. Purely by way of example, such a fluid transport arrangement may comprise a hose 109 as illustrated in Fig. 2B.

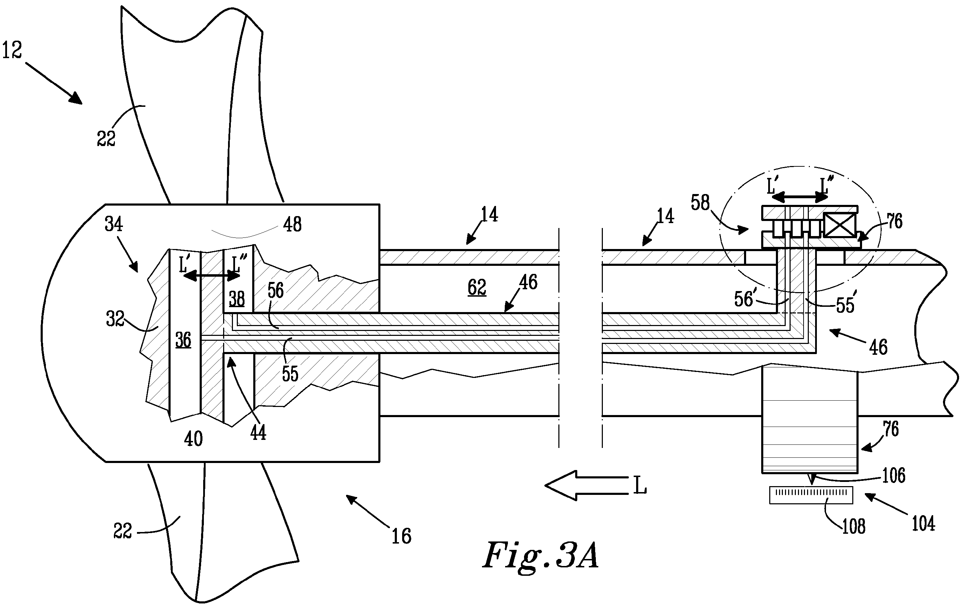

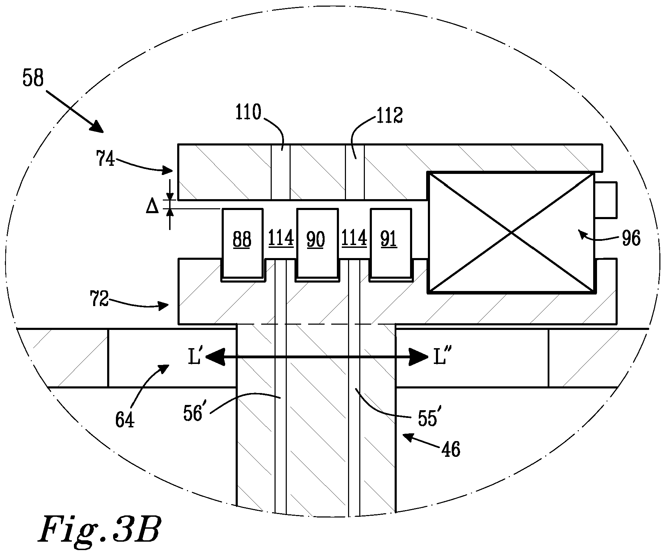

Fig. 3A illustrates another embodiment of the propeller arrangement 12 of the present invention with another implementation of the distribution system 58. As may be realized from Fig. 3A, the hydraulic servo 34 of the Fig. 3 propeller 16 is directly connected to the adjusting member 48, i.e. not via a piston rod as is the case for the Fig. 2A propeller. Thus, the fluid conveying member 43 is in the embodiment illustrated in Fig. 3A attached directly to the piston 40. Furthermore, Fig. 3A illustrates that the fluid conveying member 43 accommodates two conduit assemblies, namely a forward pitch chamber conduit assembly 55 for feeding the forward pitch chamber 36 with hydraulic fluid and the backward pitch chamber conduit assembly 56 for feeding the backward pitch chamber 38 with hydraulic fluid.

Each one of the forward pitch chamber conduit assembly 55 and the backward pitch chamber conduit assembly 56 comprises a second conduit portion 55', 56' extending through the slit 64 in the drive shaft 14. Each one of the second conduit portions 55', 56' are attached to the inner sleeve 72 of the distribution system 58, which inner sleeve 72 is rotationally attached to the outer sleeve 74 in a previously described manner. However, in the embodiment of the distribution system 58 illustrated in Fig. 3B, the sealing arrangement 82 is rigidly connected to the inner sleeve 74 and a gap Δ is provided between the sealing arrangement 82 and the outer sleeve 74. As such, in the distribution system 58 illustrated in Fig. 3B, the sealing arrangement 82, which comprises three sealing rings 88, 90, 91, is adapted to rotate with the drive shaft 14. Moreover, it should be noted that the thrust bearing 96 is in the Fig. 3B embodiment connected to the inner sleeve 72 by a groove 98 in the inner sleeve 72.

Moreover, the Fig. 3B outer sleeve 74 comprises two ducts, namely a first 110 and a second duct 112. The Fig. 3B distribution system further comprises a first 114 and a second 116 circumferentially extending chamber. The first chamber 114 is in fluid communication with the first duct 110 and the second conduit portion 56' of the backward pitch chamber conduit 56 whereas the second chamber 116 is in fluid communication with the second duct 112 and the second conduit portion 55' of the forward pitch chamber conduit 55. As regards the fluid to be transported to and/or from the forward and backward pitch chambers, oil is preferably used, for instance mineral, synthetic or vegetable oil.

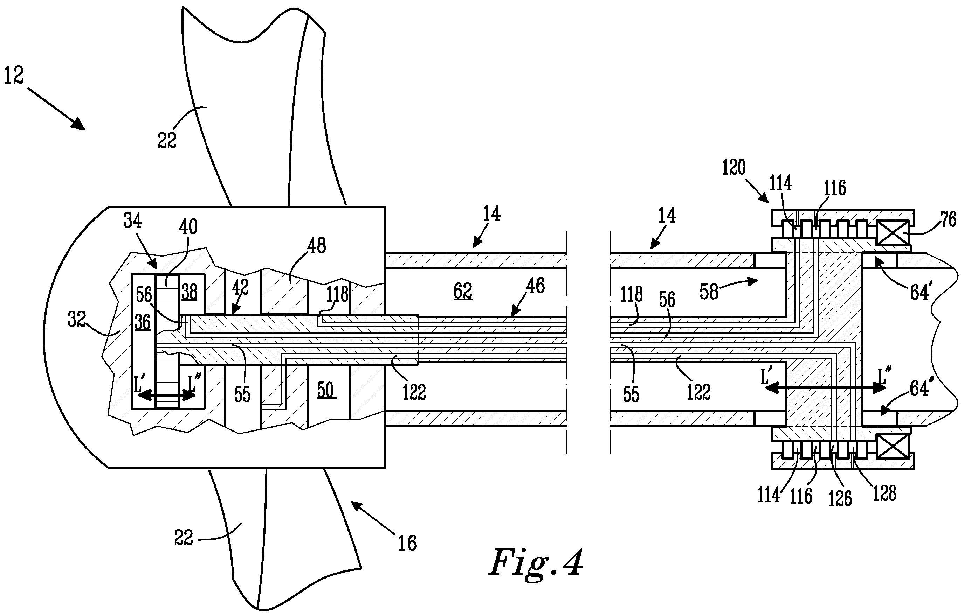

Fig. 4 illustrates another embodiment of the adjustable propeller arrangement 12 of the present invention. As may be gleaned from Fig. 4, the distribution system 58 comprises four conduit assemblies wherein two of the conduit assemblies are the forward pitch chamber conduit assembly 55 and the backward pitch chamber conduit assembly 56 which have been discussed in conjunction with Fig. 3A and 3B hereinabove. Moreover, the distribution system 58 comprises a cavity inlet conduit assembly 118 providing an inlet fluid communication between the cavity 50 and a cavity duct 120 as well as a cavity outlet conduit assembly 122 providing an outlet fluid communication between the cavity 50 and a cavity duct 124. As such, the cavity inlet conduit assembly 118 and cavity outlet conduit assembly 122 are adapted to provide a fluid circulation within the cavity 50.

Since the distribution system 58 in the Fig. 4 implementation comprises four conduit assemblies 55, 56, 118, 122 the distribution system 58 consequently comprises four chambers 114, 116, 126, 128. Moreover, Fig. 4 illustrates that the drive shaft 14 is provided with two slits 64', 64" wherein the second conduit portion of two of the conduit assemblies 56, 118 extends through a first slit 64' whereas the second conduit portion of the other two conduit assemblies 55, 122 extends through a second slit 64". In Fig. 4, the two slits 64', 64" are located on opposite sides of the centre line 130 of the drive shaft 14 but in other implementations of the drive shaft 14, the two slits 64', 64" may instead be located on the same side of the aforementioned centre line 130.

It should be realized that the present invention is not limited to the embodiments described hereinabove and illustrated in the drawings. For instance, it should be realized that a person skilled in the art would directly and unambiguously realize that the propeller 16 of any one of the implementations illustrated in Fig. 2 to Fig. 4 may be combined with the implementations of any one of the distribution systems 58 illustrated in Fig. 2 to Fig. 4 with no or minor modifications of the distribution systems 58. Moreover, it should be noted that in the examples given hereinabove, the adjusting member 48 is actuated by a hydraulic servo 34. However, the adjusting member 48 may be actuated by other means, such as an adjusting rod extending through the drive shaft 14 or a slewing bracket arrangement.

It should also be noted that although the adjustable propeller arrangement 12 of the present invention has been described hereinabove in conjunction with a ship, the adjustable propeller arrangement 12 is also applicable in other technical fields, for instance for a propeller arrangement in a wind power plant. As such, a person skilled in the art will realize that many changes and modifications may be performed within the scope of the appended claims.

## Claims

1. An adjustable propeller arrangement (12) comprising:
a drive shaft (14) extending in a longitudinal direction (L), said drive shaft (14) comprising a longitudinally extending bore (62) and a slit (64) providing a passage between said bore (62) and the outside of said drive shaft (14),
an adjustable propeller (16) connected to said drive shaft (14), said adjustable propeller (16) comprising at least one propeller blade (18, 20, 22) and an adjusting member (48) connected to said at least one propeller blade (18, 20, 22) such that the pitch of said at least one propeller blade (18, 22) is controlled by the position, in said longitudinal direction (L), of said adjusting member (48),
a conduit assembly (46) comprising:
a duct (60) located outside of said drive shaft (14),
a first conduit portion (66) extending at least partially within said drive shaft (14),
a second conduit portion (68) extending through said slit (64), and
a chamber (70) adapted to extend circumferentially around said drive shaft (14), said chamber (70) being in fluid communication with said second conduit portion (68) and said duct (60),
said conduit assembly (46) providing a fluid communication between said adjustable propeller (16) and said duct (60), wherein a rigid connection, in at least said longitudinal direction (L), is provided between said adjusting member (48) and said duct (60).

2. The adjustable propeller arrangement (12) according to claim 1, wherein said adjustable propeller arrangement (12) comprises an inner sleeve (72) and an outer sleeve (74) each one of which extends circumferentially around said drive shaft (14), said inner sleeve (72) being rigidly connected to said second conduit portion (68), said inner sleeve (72) and said outer sleeve (74) being rotatably connected to one another by a connection arrangement (76) rigidly connecting said inner sleeve (72) and said outer sleeve (74) in at least said longitudinal direction (L), said inner sleeve (72) comprising an inner wall (78) for said chamber (70) and said outer sleeve (74) comprising an outer wall (80) for said chamber, said adjustable propeller arrangement (12) further comprising a sealing arrangement (82) comprising at least two side walls (84, 86) for said chamber (70).

3. The adjustable propeller arrangement (12) according to claim 2, wherein said connection arrangement (76) comprises a thrust bearing (96).

4. The adjustable propeller arrangement (12) according to claim 2 or 3, wherein said sealing arrangement (82) is fixedly attached to said outer sleeve (74).

5. The adjustable propeller arrangement (12) according to any one of claims 2 to 4, wherein said duct (60) is located on said outer sleeve (74).

6. The adjustable propeller arrangement (12) according to any one of claims 1 to 5, wherein said adjustable propeller arrangement (12) further comprises a plurality of conduit assemblies according to any one of claims 1-5.

7. The adjustable propeller arrangement (12) according to claim 6, wherein said adjustable propeller (16) comprises a hydraulic servo (34) comprising a forward pitch chamber (36) and a backward pitch chamber (38) separated by a piston (40), said piston (40) being rigidly connected to said connecting member (48), wherein said plurality of conduit assemblies comprises a forward pitch conduit assembly (55) providing a fluid communication between said forward pitch chamber (36) and a forward pitch conduit assembly duct (112), said plurality of conduit assemblies further comprises a backward pitch conduit assembly (56) providing a fluid communication between said backward pitch chamber (38) and a backward pitch conduit assembly duct (110).

8. The adjustable propeller arrangement (12) according to claim 6 or 7, wherein said adjustable propeller (16) further comprising a cavity (50) in fluid communication with at least a part of said adjusting member (48), wherein said plurality of conduit assemblies comprises a cavity inlet assembly (118) adapted to provide an inlet fluid communication between said cavity (50) and a cavity inlet conduit assembly duct (120), said plurality of conduit assemblies further comprises a cavity outlet conduit assembly (122) adapted to provide an outlet fluid communication between said cavity (50) and a cavity outlet conduit assembly duct (124).

9. A vessel (10), **characterized in that** said vessel (10) comprises an adjustable propeller arrangement (12) according to any one of the preceding claims.

10. A method of distributing fluid to and/or from an adjustable propeller arrangement (12), said arrangement (12) comprising a drive shaft (14) extending in a longitudinal direction (L) and an adjustable propeller (16) connected to said drive shaft (14), said drive shaft (14) comprises a longitudinal axis extending parallel to said longitudinal direction (L), said drive shaft (14) being adapted to rotate about said longitudinal axis, said adjustable propeller (16) comprising at least one propeller blade (18, 22) and an adjusting member (48) connected to said propeller blade (18, 22) such that the pitch of said propeller blade is controlled by the position, in said longitudinal direction (L), of said adjusting member (48), wherein said method comprises:
a step of transporting said fluid between a duct (60) and said adjustable propeller (16) in a conduit assembly (46) extending at least partially within said drive shaft (14), said duct (60) being located outside of said drive shaft (60) at a first distance (D), in said longitudinal direction (L), from said adjusting member (48),
a step of keeping said distance (D) substantially constant during said transporting of said fluid, and
a step of preventing said duct (60) from rotating around said longitudinal axis.

11. The method according to claim 10, wherein said method further comprises a step of imparting a longitudinally extending displacement of said duct (60) relative to said drive shaft (14) when said adjusting member (48) is subjected to a longitudinally extending displacement.

## Patentansprüche

1. Einstellbare Propellervorrichtung (12) umfassend:
eine Antriebswelle (14), die sich in eine Längsrichtung (L) erstreckt, wobei die Antriebswelle (14) eine sich longitudinal erstreckende Bohrung (62) und einen Schlitz (64) aufweist, der einen Durchgang zwischen der Bohrung (62) und der Außenseite des Antriebsschafts (14) bereitstellt,
einen einstellbaren Propeller (16), der mit der Antriebswelle (14) verbunden ist, wobei der Propeller (16) wenigstens ein Propellerblatt (18, 20, 22) und ein Einstellglied (48) aufweist, das mit dem wenigstens einen Propellerblatt (18, 20, 22) verbunden ist, so dass die Neigung des wenigstens einen Propellerblatts (18, 22) steuerbar ist durch die Position des Einstellglieds (48) in der Längsrichtung (L),
eine Leitungsanordnung (46) umfassend:
einen außerhalb der Antriebswelle (14) angeordneten Kanal (60),
einen ersten Leitungsabschnitt (66), der sich zumindest teilweise innerhalb der Antriebswelle (14) erstreckt,
einen zweiten Leitungsabschnitt (68), der sich durch den Schlitz (64) erstreckt, und
eine Kammer (70), die eingerichtet ist um sich in Umfangsrichtung um die Antriebswelle (14) zu erstrecken, wobei die Kammer (70) in Fluidverbindung mit dem zweiten Leitungsabschnitt (68) und dem Kanal (60) steht,
wobei die Leitungsvorrichtung (46) eine Fluidverbindung zwischen dem einstellbaren Propeller (16) und dem Kanal (60) bereitstellt, wobei eine starre Verbindung in wenigstens der Längsrichtung (L) zwischen dem Einstellelement (48) und dem Kanal (60) bereitgestellt ist.

2. Einstellbare Propellervorrichtung (12) nach Anspruch 1, wobei die verstellbare Propellervorrichtung (12) eine innere Hülse (72) und eine äußere Hülse (74) aufweist, von denen sich jede in Umfangsrichtung um die Antriebswelle (14) erstreckt, wobei die innere Hülse (72) mit dem zweiten Leitungsabschnitt (68) starr verbunden ist, wobei die innere Hülse (72) und die äußere Hülse (74) durch eine Verbindungseinrichtung (76) drehbar miteinander verbunden sind, die mit der inneren Hülse (72) und der äußeren Hülse (74) in mindestens der Längsrichtung (L) starr verbunden ist, wobei die inneren Hülse (72) eine Innenwand (78) für die Kammer (70) aufweist und die äußere Hülse (74) eine Außenwand (80) für die Kammer aufweist, wobei die einstellbare Propellervorrichtung (12) eine Dichtungsanordnung (82) aufweist, die mindestens zwei Seitenwände (84, 86) für die Kammer (70) aufweist.

3. Einstellbare Propellervorrichtung (12) nach Anspruch 2, wobei die Verbindungseinrichtung (76) ein Axiallager (96) aufweist.

4. Einstellbare Propellervorrichtung (12) nach Anspruch 2 oder 3, wobei die Dichtungsanordnung (82) fest an der äußeren Hülse (74) befestigt ist.

5. Einstellbare Propellervorrichtung (12) nach einem der Ansprüche 2 bis 4, wobei der Kanal (60) auf der äußeren Hülse (74) angeordnet ist.

6. Einstellbare Propellervorrichtung (12) nach einem der Ansprüche 1 bis 5, wobei die einstellbare Propellervorrichtung (12) ferner eine Vielzahl von Leitungsanordnungen nach einem der Ansprüche 1-5 aufweist.

7. Einstellbare Propellervorrichtung (12) nach Anspruch 6, wobei der verstellbare Propeller (16) ein hydraulisches Servoelement (34) aufweist, das eine Vorwärtsneigungskammer (36) und eine Rückwärtsneigungskammer (38) aufweist, die durch einen Kolben (40) voneinander separiert sind, wobei der Kolben (40) starr mit dem Verbindungsglied (48) verbunden ist, wobei die Mehrzahl von Leitungsanordnungen ein Vorwärtsneigungsleitungsanordnung (55) aufweist, die eine Fluidverbindung zwischen der Vorwärtsneigungskammer (36) und einer Vorwärtsneigungsleitungsanordnungskanal (112) bereitstellt, wobei die Mehrzahl von Leitungsanordnungen eine Rückwärtsneigungsleitungsanordnung (56) aufweist, die eine Fluidverbindung zwischen der Rückwärtsneigungskammer (38) und einem Rückwärtsneigungsleitungsanordnungskanal (110) bereitstellt.

8. Einstellbare Propellervorrichtung (12) nach Anspruch 6 oder 7, wobei der einstellbare Propeller (16) ferner einen Hohlraum (50) in Fluidverbindung mit wenigstens einem Teil des Einstellglieds (48) aufweist, wobei die Vielzahl von Leitungsanordnungen eine Hohlraumeinlassanordnung (118) aufweist, die eingerichtet ist, um eine Einlassfluidverbindung zwischen dem Hohlraum (50) und einem Hohlraumeinlassleitungsanordnungskanal (120) breitzustellen, wobei die Mehrzahl von Leitungsanordnungen ferner eine Hohlraumauslassleitungsanordnung (122) umfasst, die eingerichtet ist, um eine Auslassfluidverbindung zwischen dem Hohlraum (50) und einem Hohlraumauslassleitungsanordnungskanal (124) bereitzustellen.

9. Wasserfahrzeug (10), **dadurch gekennzeichnet, dass** das Wasserfahrzeug (10) eine einstellbaren Propellervorrichtung (12) nach einem de vorherigen Ansprüche aufweist.

10. Verfahren zum Verteilen von Fluid hin zu und/oder weg von einer einstellbaren Propellervorrichtung (12), wobei die Vorrichtung (12) eine sich in Längsrichtung (L) erstreckende Antriebswelle (14) und einen einstellbaren Propeller (16) aufweist, der mit der Antriebswelle (14) verbunden ist, wobei die Antriebswelle (14) eine parallel zur Längsrichtung (L) verlaufende Längsachse aufweist, wobei die Antriebswelle (14) eingerichtet ist, um sich um die Längsachse zu drehen, wobei der einstellbare Propeller (16) mindestens ein Propellerblatt (18, 22) und ein mit dem Propellerblatt (18, 22) verbundenes Einstellglied (48) aufweist, so dass eine Neigung des Propellerblatts (18, 22) durch die Position des Einstellglieds (48) in der Längsrichtung (L) gesteuert wird, wobei das Verfahren aufweist:
einen Schritt des Transports des Fluids zwischen einem Kanal (60) und dem einstellbaren Propeller (16) in einer Leitungsanordnung (46), die sich zumindest teilweise innerhalb der Antriebswelle (14) erstreckt, wobei der Kanal (60) außerhalb der Antriebswellen (14) in einem ersten Abstand (D) in der Längsrichtung (L) von dem Einstellglied (48) angeordnet ist,
einen Schritt des im Wesentlichen konstant Haltens des Abstands (D) während des Transports des Fluids, und
einen Schritt des Verhinderns, dass der Kanal (60) um die Längsachse rotiert.

11. Verfahren nach Anspruch 10, wobei das Verfahren ferner einen Schritt des Übermitteins einer sich longitudinal erstreckenden Verschiebung des Kanals (60) relativ zu der Antriebswelle (14) aufweist, wenn das Einstellglied (48) einer sich longitudinal erstreckenden Verschiebung unterworfen wird.

## Revendications

1. Système d'hélice réglable (12) comprenant :
- un arbre d'entraînement (14) s'étendant dans une direction longitudinale (L), ledit arbre d'entraînement (14) comprenant un alésage (62) s'étendant longitudinalement et une fente (64) fournissant un passage entre ledit alésage (62) et l'extérieur dudit arbre d'entraînement (14),
- une hélice réglable (16) reliée audit arbre d'entraînement (14), ladite hélice réglable (16) comprenant au moins une pale d'hélice (18, 20, 22) et un élément de réglage (48) relié à ladite au moins une pale d'hélice (18, 20, 22) de sorte que le pas de ladite au moins une pale d'hélice (18, 22) est commandé par la position, dans ladite direction longitudinale (L), dudit élément de réglage (48),
- un ensemble de canalisation (46) comprenant :
- un conduit (60) situé à l'extérieur dudit arbre d'entraînement (14),
- une première partie de canalisation (66) s'étendant au moins partiellement à l'intérieur dudit arbre d'entraînement (14),
- une seconde partie de canalisation (68) s'étendant à travers ladite fente (64), et
- une chambre (70) adaptée à s'étendre circonférentiellement autour dudit arbre d'entraînement (14), ladite chambre (70) étant en communication de fluide avec ladite seconde partie de canalisation (68) et ledit conduit (60),
- ledit ensemble de canalisation (46) assurant une communication de fluide entre ladite hélice réglable (16) et ledit conduit (60), dans lequel une liaison rigide, dans au moins ladite direction longitudinale (L), est ménagée entre ledit élément de réglage (48) et ledit conduit (60).

2. Système d'hélice réglable (12) selon la revendication 1, dans lequel ledit système d'hélice réglable (12) comprend un manchon intérieur (72) et un manchon extérieur (74) chacun d'entre eux s'étendant circonférentiellement autour dudit arbre d'entraînement (14), ledit manchon intérieur (72) étant relié rigidement à ladite seconde partie de canalisation (68), ledit manchon intérieur (72) et ledit manchon extérieur (74) étant reliés de façon rotative l'un à l'autre par un agencement de connexion (76) reliant rigidement ledit manchon intérieur (72) et ledit manchon extérieur (74) dans au moins ladite direction longitudinale (L), ledit manchon intérieur (72) comprenant une paroi intérieure (78) pour ladite chambre (70) et ledit manchon extérieur (74) comprenant une paroi extérieure (80) pour ladite chambre, ledit système d'hélice réglable (12) comprenant en outre un agencement d'étanchéité (82) comprenant au moins deux parois latérales (84, 86) pour ladite chambre (70).

3. Système d'hélice réglable (12) selon la revendication 2, dans lequel ledit agencement de connexion (76) comprend un palier de butée (96).

4. Système d'hélice réglable (12) selon la revendication 2 ou 3, dans lequel ledit agencement d'étanchéité (82) est attaché de manière fixe audit manchon extérieur (74).

5. Système d'hélice réglable (12) selon l'une quelconque des revendications 2 à 4, dans lequel ledit conduit (60) est situé sur ledit manchon extérieur (74).

6. Système d'hélice réglable (12) selon l'une quelconque des revendications 1 à 5, dans lequel ledit système d'hélice ajustable (12) comprend en outre une pluralité d'ensembles de canalisation selon l'une quelconque des revendications 1-5.

7. Système d'hélice réglable (12) selon la revendication 6, dans lequel ladite hélice réglable (16) comprend un mécanisme servo-hydraulique (34) comprenant une chambre de pas avant (36) et une chambre de pas arrière (38) séparée par un piston (40), ledit piston (40) étant relié rigidement audit élément de connexion (48), dans lequel ladite pluralité d'ensembles de canalisation comprend un ensemble de canalisation de pas avant (55) fournissant une communication de fluide entre ladite chambre de pas avant (36) et un conduit de pas avant (112), ladite pluralité d'ensembles de canalisation comprend en outre un ensemble de canalisation de pas arrière (56) assurant une communication de fluide entre ladite chambre de pas arrière (38) et un conduit d'ensemble de canalisation de pas arrière (110).

8. Système d'hélice réglable (12) selon la revendication 6 ou 7, dans lequel ladite hélice réglable (16) comprend en outre une cavité (50) en communication de fluide avec au moins une partie dudit élément de réglage (48), dans lequel ladite pluralité d'ensembles de canalisation comprend un ensemble d'admission de cavité (118) adapté à fournir une communication de fluide d'admission entre ladite cavité (50) et un conduit d'ensemble d'admission de cavité (120), ladite pluralité d'ensembles de canalisation comprenant en outre un ensemble de canalisation de sortie de cavité (122) adapté à fournir une communication de fluide de sortie entre ladite cavité (50) et un conduit d'ensemble de canalisation de sortie de cavité (124).

9. Navire (10), **caractérisé en ce que** ledit navire (10) comprend un système d'hélice réglable (12) selon l'une quelconque des revendications précédentes.

10. Procédé de distribution de fluide vers et/ou à partir d'un système d'hélice réglable (12), ledit système (12) comprenant un arbre d'entraînement (14) s'étendant dans une direction longitudinale (L) et une hélice réglable (16) reliée audit arbre d'entraînement (14), ledit arbre d'entraînement (14) comprend un axe longitudinal s'étendant parallèlement à ladite direction longitudinale (L), ledit arbre d'entraînement (14) étant adapté à tourner autour dudit axe longitudinal, ladite hélice réglable (16) comprenant au moins une pale d'hélice (18, 22) et un élément de réglage (48) relié à ladite pale d'hélice (18, 22) de sorte que le pas de ladite pale d'hélice est commandé par la position, dans ladite direction longitudinale (L), de l'élément de réglage (48), dans lequel ledit procédé comprend :
- une étape de transport dudit fluide entre un conduit (60) et ladite hélice réglable (16) dans un ensemble de canalisation (46) s'étendant au moins partiellement à l'intérieur dudit arbre d'entraînement (14), ledit conduit (60) étant situé à l'extérieur dudit arbre d'entraînement (60) à une première distance (D), dans ladite direction longitudinale (L), à partir dudit élément de réglage (48),
- une étape de maintien de ladite distance (D) sensiblement constante pendant ledit transport dudit fluide, et
- une étape où ledit conduit (60) est empêché de tourner autour dudit axe longitudinal.

11. Procédé selon la revendication 10, dans lequel ledit procédé comprend en outre une étape pour conférer audit conduit (60) un déplacement s'étendant longitudinalement par rapport audit arbre d'entraînement (14) lorsque ledit élément de réglage (48) est soumis à un déplacement s'étendant longitudinalement.
